# EUROPÄISCHE PATENTSCHRIFT

(11) **EP 3 362 213 B1**
(45) Veröffentlichungstag und Bekanntmachung des Hinweises auf die Patenterteilung: **07.04.2021**
(21) Anmeldenummer: 17703705.8
(22) Anmeldetag: 01.02.2017
(51) Int. Cl.: B23B 27/08, B23B 27/16

(54) **SCHNEIDPLATTE, WERKZEUGHALTER UND WERKZEUG ZUR SPANENDEN BEARBEITUNG EINES WERKSTÜCKS**
CUTTING INSERT, TOOL HOLDER, AND TOOL FOR MACHINING A WORKPIECE
PLAQUETTE DE COUPE, PORTE-OUTIL ET OUTIL D'USINAGE D'UNE PIÈCE PAR ENLÈVEMENT DE COPEAUX

(30) Priorität: 29.02.2016 DE 102016103565
(43) Veröffentlichungstag der Anmeldung: 22.08.2018
(73) Patentinhaber: Hartmetall-Werkzeugfabrik Paul Horn GmbH, 72072 Tübingen (DE)
(72) Erfinder: KEMMLER, Tobias, 72124 Pliezhausen (DE)
(74) Vertreter: Witte, Weller & Partner Patentanwälte mbB
(86) Internationale Anmeldenummer: PCT/EP2017/052147
(87) Internationale Veröffentlichungsnummer: WO 2017/148641

(56) Entgegenhaltungen:
- EP-A1- 1 375 038
- DE-A1-102006 017 458
- DE-U1- 20 308 159
- JP-A- 2006 167 818
- US-A1- 2011 110 733

## Beschreibung

Die vorliegende Erfindung betrifft eine Schneidplatte, einen Werkzeughalter sowie ein Werkzeug mit einer solchen Schneidplatte und einem solchen Werkzeughalter. Bei dem Werkzeug handelt es sich um ein Werkzeug zur spanenden Bearbeitung eines Werkstücks. Genauer gesagt handelt es sich dabei vorzugsweise um ein Drehwerkzeug mit einem Werkzeughalter und einer am Werkzeughalter austauschbar festlegbaren Schneidplatte. Die Schneidplatte ist mithilfe eines oder mehrerer Befestigungselemente am Werkzeughalter befestigbar.

Drehwerkzeuge mit austauschbaren Wendeschneidplatten sind bereits in einer Vielzahl unterschiedlicher Ausführungen bekannt. Ein Beispiel derartiger Drehwerkzeuge sind Langdrehwerkzeuge, welche in sogenannten Langdreh-Maschinen bzw. Langdrehautomaten eingesetzt werden.

Herkömmliche Langdreh-Maschinen werden mechanisch über vorgegebene Kurven gesteuert. Moderne Langdreh-Maschinen werden mittels CNC-Technik über Computer gesteuert. Für diese modernen, computergesteuerten Langdreh-Maschinen existiert eine Vielzahl von Drehwerkzeugen mit austauschbarer Wendeschneidplatte.

Die herkömmlichen, kurvengesteuerten Langdreh-Maschinen sind jedoch ebenfalls noch sehr verbreitet und werden nach wie vor in der Praxis eingesetzt. Beispielsweise bei der Herstellung von kleinsten bzw. feinmechanischen Teilen, wie sie in der Uhren-Industrie benötigt werden, kommen kurvengesteuerte Langdreh-Maschinen nach wie vor zum Einsatz. Die Anzahl der hierfür geeigneten Werkzeuge ist allerdings eher begrenzt. Dies liegt vor allem daran, dass für derartige Anwendungen sehr kleine Abmessungen des Werkzeugschafts erforderlich sind. In der Regel sind Werkzeughalter mit einer Querschnittsgröße von maximal 6 x 6 mm hierfür geeignet. Dies wiederum stellt besondere Anforderungen an die Schnittstelle zwischen Werkzeughalter und Schneidplatte sowie an die Gesamtstabilität des Werkzeugs. Im Übrigen kommt es bei der Fertigung von sehr kleinen, feinmechanischen Bauteilen, wie sie in der Uhren-Industrie eingesetzt werden, auf eine exakte, wiederholbare Genauigkeit bei den Werkzeugen an. Dies in Kombination mit den relativ kleinen, zu erzielenden Abmessungen und einer nach wie vor zu garantierenden mechanischen Stabilität des Werkzeugs gewährleisten zu können, ist aus konstruktiver Sicht eine große Herausforderung.

Beispiele solcher Drehwerkzeuge, welche mit sehr kleinen Abmessungen herstellbar sind und sich für die oben genannte Anwendung bei der Fertigung von Kleinstteilen für die Uhren-Industrie eignen, sind aus der EP 1 617 963 B1, der EP 1 368 149 B1sowie aus der EP 1 189 719 B1 bekannt.

Bei diesen Werkzeugbeispielen umfasst die Schnittstelle zwischen Schneidplatte und Werkzeughalter eine geriffelte Struktur, anhand derer sich die Schneidplatte und der Werkzeughalter berühren. Diese Art von Schnittstelle hat jedoch in Bezug auf Stabilität und Präzision mehrere Nachteile. Zum einen werden die in axialer Richtung bzw. Längsrichtung des Werkzeugs wirkenden Kräfte über die Schrauben, mittels derer die Schneidplatte am Werkzeughalter befestigt ist, in den Werkzeughalter abgeleitet. Dies führt zu einer relativ hohen Belastung der Schrauben und zu einer geringeren Positioniergenauigkeit. Im Übrigen handelt es sich bei der geriffelten Struktur um eine gesinterte und nicht nachgeschliffene, also sinterrohe Struktur, was wiederum die Positioniergenauigkeit negativ beeinflusst. Die DE 203 08 159 U1 und die EP 1 375 038 A1 offenbaren jeweils eine Schneidplatte mit den Merkmalen der Oberbegriffe der unabhängigen Ansprüche 1 und 13.

Vor diesem Hintergrund liegt der vorliegenden Erfindung die Aufgabe zugrunde, eine Schneidplatte der oben genannten Art bereitzustellen, welche den oben genannten Anforderungen gerecht wird und die Nachteile der aus dem Stand der Technik bekannten Werkzeuge überwinden. Dabei ist es insbesondere eine Aufgabe, die Schnittstelle zwischen Schneidplatte und Werkzeughalter in Bezug auf Stabilität und Präzision zu verbessern, so dass sich das Werkzeug für die Herstellung von feinmechanischen Kleinstteilen, wie sie beispielsweise in der Uhren-Industrie benötigt werden, besonders gut eignet.

Diese Aufgabe wird durch eine Schneidplatte gemäß Anspruch 1 sowie eine Schneidplatte gemäß Anspruch 13 gelöst. Die Schneidplatte der unabhängigen Ansprüche 1 und 13 kann in einem Werkzeughalter fixiert werden, um Werkzeuge gemäß den Ansprüchen 11 und 14 zu bilden.

Die erfindungsgemäße Schneidplatte weist eine erste Schneide und eine erste Schneidplatten-Bohrung auf, wobei die Schneidplatte eine im Wesentlichen längliche Form hat und sich im Wesentlichen entlang einer Schneidplatten-Längsrichtung erstreckt. Die erste Schneidplatten-Bohrung erstreckt sich entlang einer ersten Bohrungsachse, welche orthogonal, mit einer Abweichung von ± 3°, zu der Schneidplatten-Längsrichtung verläuft. Die Schneidplatte weist des Weiteren eine seitlich hervorstehende Erhöhung auf, welche auf einer quer zu der ersten Bohrungsachse ausgerichteten Seite der Schneidplatte angeordnet ist. An der Erhöhung sind zur Anlage der Schneidplatte an einem Werkzeughalter eine erste seitliche Halter-Anlagefläche, eine axiale Halter-Anlagefläche und eine erste horizontale Halter-Anlagefläche angeordnet. Die erste seitliche Halter-Anlagefläche verläuft orthogonal, mit einer Abweichung von ± 3°, zu der ersten Bohrungsachse. Die axiale Halter-Anlagefläche und die erste horizontale Halter-Anlagefläche verlaufen quer zueinander und orthogonal zu der ersten seitlichen Halter-Anlagefläche. Die Schneidplatte weist ferner eine zweite Schneidplatten-Bohrung auf, welche sich entlang einer zweiten Bohrungsachse erstreckt, die parallel zu der ersten Bohrungsachse ausgerichtet ist. Sowohl die erste als auch die zweite Schneidplatten-Bohrung durchdringen die Erhöhung orthogonal zu der ersten seitlichen Halter-Anlagefläche. Die Schneidplatte ist dadurch gekennzeichnet, dass an der Erhöhung ferner eine zweite seitliche Halter-Anlagefläche angeordnet ist, welche in einer gleichen Ebene mit der ersten seitlichen Halter-Anlagefläche liegt und von dieser in Schneidplatten-Längsrichtung beabstandet ist, wobei die erste seitliche Halter-Anlagefläche die erste Schneidplatten-Bohrung zumindest teilweise umgibt, und wobei die zweite seitliche Halter-Anlagefläche die zweite Schneidplatten-Bohrung zumindest teilweise umgibt.

Ein bevorzugtes Werkzeug kann eine Schneidplatte der oben genannten Art, einen Werkzeughalter sowie zumindest ein Befestigungsmittel zur Befestigung der Schneidplatte am Werkzeughalter aufweisen. Der Werkzeughalter weist äquivalent dazu eine Schneidplatten-Aufnahme zur Aufnahme einer Schneidplatte und eine erste Halter-Bohrung auf. Die erste Halter-Bohrung erstreckt sich entlang einer dritten Bohrungsachse, welche im Wesentlichen orthogonal zu der Halter-Längsrichtung verläuft. In der Schneidplatten-Aufnahme ist eine im Wesentlichen entlang der Halter-Längsrichtung verlaufende Vertiefung vorgesehen. In der Vertiefung sind zur Anlage einer Schneidplatte an dem Werkzeughalter eine seitliche Schneidplatten-Anlagefläche, eine axiale Schneidplatten-Anlagefläche und eine horizontale Schneidplatten-Anlagefläche angeordnet. Die seitliche Schneidplatten-Anlagefläche verläuft im Wesentlichen orthogonal zu der dritten Bohrungsachse. Die axiale Schneidplatten-Anlagefläche und die horizontale Schneidplatten-Anlagefläche verlaufen quer zueinander und im Wesentlichen orthogonal zu der seitlichen Schneidplatten-Anlagefläche. Die, Schneidplatte und der Werkzeughalter liegen vorzugsweise ausschließlich mit der an der Schneidplatte angeordneten Erhöhung und einer Vertiefung in der Schneidplatten-Aufnahme des Werkzeughalters aneinander.

Es sei darauf hingewiesen, dass vorliegend unter dem Begriff "im Wesentlichen orthogonal" vorzugsweise, jedoch nicht zwingend notwendigerweise, exakt orthogonal verstanden wird. Unter diesen Begriff sollen aber auch kleinere Abweichungen von einem exakten 90°-Winkel fallen, welche im Bereich von ± 3° sind.

Unter dem Begriff "quer" wird vorliegend eine nicht-parallele Ausrichtung, also ein Winkel ungleich 0° verstanden. Der Begriff "quer" kann auch orthogonal beinhalten.

Ferner sei darauf hingewiesen, dass die Begriffe "erste"/"ersten", "zweite"/"zweiten" und "dritte"/"dritten", welche den Begriffen "Schneide", "Schneidplatten-Bohrung", "Bohrungsachse", "seitliche Halter-Anlagefläche" und "horizontale Halter-Anlagefläche" vorangestellt sind, vorliegend lediglich zur begrifflichen Differenzierung einzelner Merkmale mit gleicher Bezeichnung verwendet werden, jedoch keinerlei Priorität, Reihenfolge oder sonstige Bedeutung implizieren sollen.

Die vorliegende Erfindung ist insbesondere gekennzeichnet durch die Verbesserung der Schnittstelle, mithilfe derer die Schneidplatte am Werkzeughalter anliegt. Hierzu ist auf einer Seitenfläche der Schneidplatte, welche quer zu der ersten Bohrungsachse ausgerichtet ist, eine vorzugsweise längliche Erhöhung angeordnet, welche sich im Wesentlichen entlang der Schneidplatten-Längsrichtung erstreckt. An dieser Erhöhung sind alle Anlageflächen angeordnet, mit denen die Schneidplatte den Werkzeughalter berührt. Diese Anlageflächen werden vorliegend allgemein als Halter-Anlageflächen bezeichnet.

Erfindungsgemäß sind an der genannten Erhöhung zumindest zwei seitliche Halter-Anlageflächen, eine axiale Halter-Anlagefläche und eine horizontale Halter-Anlagefläche angeordnet. Die seitlichen Halter-Anlagefläche verlaufen vorzugsweise parallel zur Schneidplatten-Längsrichtung und orthogonal zur ersten bzw. zweiten Bohrungsachse. Die axiale und die horizontale Halter-Anlagefläche verlaufen vorzugsweise orthogonal zu den seitlichen Halter-Anlageflächen, wobei die horizontale Halter-Anlagefläche vorzugsweise parallel zur Schneidplatten-Längsrichtung verläuft und die axiale Halter-Anlagefläche mit der horizontalen Halter-Anlagefläche untereinander vorzugsweise einen spitzen Winkel, besonders bevorzugt einen Winkel von 45° einschließen.

Durch die Anordnung dieser zumindest vier Anlageflächen an der Erhöhung, welche von einer Seite der Schneidplatte absteht, kann die Schneidplatte allein mithilfe dieser Erhöhung in allen drei Raumrichtungen abgestützt werden.

Im Vergleich zu den aus der EP 1 617 963 B1, EP 1 368 149 B1 und EP 1 189 719 B1 bekannten Schneidplatten-Beispielen können die Befestigungsmittel zur Befestigung der Schneidplatte am Werkzeughalter dadurch entlastet werden. Hierdurch ergibt sich ein stabilerer und präziserer Plattensitz. Darüber hinaus kann durch diese Art der Realisierung der Anlageflächen eine sehr kompakte Bauweise des Werkzeugs erzielt werden, wobei die Schneidplatte auch bei sehr kleinen Abmessungen des Werkzeughalters die Schneidplatte im Vergleich dazu noch mit relativ großen Abmessungen ausgeführt sein kann. Dies ist insbesondere deshalb möglich, da aufgrund der an der Erhöhung der Schneidplatte und korrespondierend dazu in der Vertiefung des Werkzeughalters vorgesehenen Anlageflächen der Werkzeughalter die Schneidplatte nicht mehr umgeben muss. Die Schneidplatte kann daher eine Schneidplattenhöhe aufweisen, welche sich um weniger als 5 % von einer Werkzeughalterhöhe des Werkzeughalters unterscheidet, wobei die genannte Schneidplattenhöhe orthogonal zu der ersten Bohrungsachse sowie orthogonal zur Schneidplatten-Längsrichtung gemessen wird, und wobei die genannte Werkzeughalterhöhe orthogonal zu der dritten Bohrungsachse sowie orthogonal zu der Halter-Längsrichtung gemessen wird. Insgesamt lässt sich ein Werkzeug mit einem Querschnitt von 6 x 6 mm oder auch kleiner realisieren.

Gemäß einer Ausgestaltung umgibt die erste seitliche Halter-Anlagefläche die erste Schneidplatten-Bohrung vollständig. Ferner ist es dabei bevorzugt, dass die erste seitliche Halter-Anlagefläche an die erste Schneidplatten-Bohrung angrenzt. Weiter vorzugsweise umgibt auch die zweite seitliche Halter-Anlagefläche die zweite Schneidplatten-Bohrung vollständig.

Gemäß einer weiteren Ausgestaltung ist die erste seitliche Halter-Anlagefläche und/oder die zweite seitliche Halter-Anlagefläche eine geschliffene Fläche. Bei der axialen Halter-Anlagefläche und der ersten horizontalen Halter-Anlagefläche handelt es sich dagegen vorzugsweise um sinterrohe Flächen.

Unter einer sinterrohen Fläche wird eine Fläche verstanden, welche bei einem gesinterten Bauteil nicht zusätzlich durch Schleifen nachbearbeitet ist.

Die vorliegende Erfindung ermöglicht also eine sehr exakte und stabile Anlage der Schneidplatte am Werkzeughalter, trotz der Tatsache, dass es sich bei einem Großteil der Anlageflächen, welche an der Schneidplatte vorgesehen sind, um ungeschliffene, sinterrohe Anlageflächen handelt. Dies wiederum ergibt einen enormen Kostenvorteil aufgrund des minimierten Schleifaufwands während der Fertigung. Die zumindest eine geschliffene, seitliche Halter-Anlagefläche ermöglicht eine großflächige, stabile und präzise Anlage der Schneidplatte am Werkzeughalter. Indem die zumindest eine Schneide der Schneidplatte in einem Schleifhalter mit denselben Schnittstellen wie der des erfindungsgemäßen Werkzeughalters geschliffen wird, gelingt es darüber hinaus trotz der sinterrohen Flächen auch eine hochpräzise horizontale und axiale Positionierung der Schneidplatte zu erreichen.

Gemäß einer weiteren Ausgestaltung hat die Schneidplatte eine parallel zur ersten Bohrungsachse gemessene Gesamtbreite, welche kleiner ist als die Summe aus einer parallel zur ersten Bohrungsachse gemessenen Breite der ersten Schneide und einer parallel zur ersten Bohrungsachse gemessenen Höhe der Erhöhung.

Mit anderen Worten ist der Grundkörper der Schneidplatte, an dessen einer Seite die Erhöhung angeordnet ist und an dessen in Schneidplatten-Längsrichtung betrachteten einen Ende die erste Schneide angeordnet ist, im Bereich der ersten Schneide breiter ausgestaltet als im mittleren Bereich des Grundkörpers, an welchem die Erhöhung angeordnet ist. Dadurch kann die Erhöhung bei gleicher Schneidplatten-Gesamtbreite höher ausgeführt werden. Dies wiederum ermöglicht größere Anlageflächen, welche an der Erhöhung angeordnet sind. Somit lässt sich eine stabilere Schnittstelle realisieren und es kommt zu einer vergleichsweise geringeren Flächenpressung an der Schnittstelle zwischen Schneidplatte und Werkzeughalter während der Verwendung des Werkzeugs.

Die Aufteilung der seitlichen Halter-Anlagefläche in eine erste und eine davon getrennte, zweite seitliche Halter-Anlagefläche ermöglicht eine weitere Erhöhung der Stabilität und Präzision des Plattensitzes. Bei der zweiten seitlichen Halter-Anlagefläche handelt es sich wie auch bei der ersten seitlichen Halter-Anlagefläche vorzugsweise um eine geschliffene Fläche. Sie grenzt an die zweite Schneidplatten-Bohrung vorzugsweise unmittelbar an.

Gemäß einer weiteren Ausgestaltung ist an der Erhöhung ferner eine zweite horizontale Halter-Anlagefläche angeordnet, welche von der ersten horizontalen Halter-Anlagefläche in Schneidplatten-Längsrichtung beabstandet ist

Gemäß dieser Ausgestaltung existieren an der Erhöhung somit insgesamt fünf Anlageflächen, nämlich eine axiale Halter-Anlagefläche, zwei seitliche Halter-Anlageflächen und zwei horizontale Halter-Anlageflächen. Dies ermöglicht eine weitere Steigerung der Stabilität und Präzision des Plattensitzes. Bei der zweiten horizontalen Halter-Anlagefläche handelt es sich wie auch bei der ersten horizontalen Halter-Anlagefläche vorzugsweise um eine sinterrohe Fläche.

Vorzugsweise liegt die zweite horizontale Halter-Anlagefläche in der gleichen Ebene mit der ersten horizontalen Halter-Anlagefläche. Beide horizontalen Halter-Anlageflächen verlaufen vorzugsweise im Wesentlichen parallel zur Schneidplatten-Längsrichtung. In der Praxis sind diese jedoch nicht exakt parallel zueinander und zur Schneidplatten-Längsrichtung, da sie sich sinterroh nicht exakt horizontal fertigen lassen. Gemäß einer bevorzugten Ausgestaltung sind die beiden horizontalen Halter-Anlagefläche daher um 0,5° relativ zur Schneidplatten-Längsrichtung geneigt. Die Fertigungstoleranz ist im Bereich +/-0,5°. Dadurch können die Flächen absolut gesehen zwischen 0° und 1° variieren. Allerdings sollten sie Flächen nur so geneigt sein, dass der Abstand zwischen den beiden horizontalen Anlageflächen durch die Neigung nicht kleiner, sondern nur größer ist als im Vergleich zu exakt horizontalen Flächen.

In der zuletzt genannten Ausgestaltung ist es ferner bevorzugt, dass ein in Schneidplatten-Längsrichtung gemessener erster Abstand zwischen der ersten und zweiten horizontalen Halter-Anlagefläche größer ist als ein in Schneidplatten-Längsrichtung gemessener zweiter Abstand zwischen der ersten und zweiten Bohrungsachse.

Die horizontalen Halter-Anlageflächen wirken jeweils als Auflager, welches während des Einsatzes des Werkzeuges in Vertikalrichtung wirkende Kräfte aufnimmt. Dadurch, dass der Abstand zwischen den beiden horizontalen Halter-Anlageflächen und damit der Lagerabstand (erster Abstand) größer ist als der Abstand, welchen die beiden Bohrungen voneinander haben (zweiter Abstand), wird ein Verkippen der Schneidplatte um eine zu den Bohrungsachsen parallele Querachse bereits während des Anziehens der Befestigungsschrauben wirksam verhindert.

Gemäß einer weiteren Ausgestaltung grenzt die erste horizontale Halter-Anlagefläche an einem ersten Ende an eine, an der Erhöhung angeordnete, erste konvex geformte Fläche an und an einem in Schneidplatten-Längsrichtung betrachtet gegenüberliegenden, zweiten Ende an eine, an der Erhöhung angeordnete, zweite konvex geformte Fläche an. Ebenso grenzt auch die zweite horizontale Halter-Anlagefläche an ihren beiden in Schneidplatten-Längsrichtung gegenüberliegenden Enden an jeweils eine konvex geformte Fläche an.

Hierdurch ergibt sich eine exakt definierte horizontale Auflage der Schneidplatte am Werkzeughalter. Die in der Vertiefung der Schneidplatten-Aufnahme am Werkzeughalter vorgesehene, entsprechende horizontale Schneidplatten-Anlagefläche wird vorzugsweise durch lediglich eine, durchgängige, planare Fläche gebildet.

Gemäß einer weiteren Ausgestaltung ist an der Erhöhung ferner eine konkav geformte Fläche vorgesehen, welche in Schneidplatten-Längsrichtung zwischen der ersten und der zweiten horizontalen Halter-Anlagefläche angeordnet ist. Diese konkav geformte Fläche berührt den Werkzeughalter im zusammengebauten Zustand des Werkzeugs nicht. Sie ist zwischen den beiden oben genannten horizontalen Auflagern angeordnet.

Gemäß einer weiteren Ausgestaltung ist eine orthogonal zu der ersten Bohrungsachse sowie orthogonal zu der Schneidplatten-Längsrichtung gemessene Breite der Erhöhung kleiner als eine parallel zu der Breite der Erhöhung gemessene Gesamthöhe der Schneidplatte. Die Erhöhung erstreckt sich somit also nicht über die Gesamthöhe der Schneidplatte, sondern vorzugsweise nur über einen Großteil der Gesamthöhe der Schneidplatte. Die Erhöhung ist vorzugsweise zentral bzw. mittig an der Schneidplatte angeordnet, so dass sich eine 180°-Drehsymmetrie ergibt.

Gemäß einer weiteren Ausgestaltung weist die Schneidplatte nicht nur eine Schneide, sondern zwei Schneiden, nämlich eine erste und eine zweite Schneide auf. In diesem Fall ist die Schneidplatte vorzugsweise um eine Querachse, welche parallel zu der ersten Bohrungsachse verläuft, 180° drehsymmetrisch.

Unter einer 180°-Drehsymmetrie wird eine Symmetrieeigenschaft verstanden, bei der sich der Körper bei einer Rotation um 180° um eine Achse (hier die Querachse) wieder auf sich selber abbildet. Die Schneidplatte lässt also im Falle eines Verschleißes der ersten Schneide vom Werkzeughalter lösen, um 180° rotieren und dann wieder am Werkzeughalter befestigen, so dass dann die zweite Schneide weiter verwendet werden kann.

Die oben genannten Ausgestaltungen beziehen sich insbesondere auf die Schneidplatte. Es versteht sich jedoch, dass einige der genannten Merkmale auch korrespondierend bzw. entsprechend dazu am Werkzeughalter vorgesehen sein können.

Die Schneidplatte des unabhängigen Anspruchs 13 weist eine erste Schneide und eine erste Schneidplatten-Bohrung auf, wobei die Schneidplatte eine im Wesentlichen längliche Form hat und sich im Wesentlichen entlang einer Schneidplatten-Längsrichtung erstreckt, wobei sich die erste Schneidplatten-Bohrung entlang einer ersten Bohrungsachse erstreckt, welche orthogonal, mit einer Abweichung von ± 3°, zu der Schneidplatten-Längsrichtung verläuft, wobei die Schneidplatte eine seitlich hervorstehende Erhöhung aufweist, welche auf einer quer zu der ersten Bohrungsachse ausgerichteten Seite der Schneidplatte angeordnet ist, und wobei an der Erhöhung eine erste seitliche Halter-Anlagefläche, eine axiale Halter-Anlagefläche und eine erste horizontale Halter-Anlagefläche zur Anlage der Schneidplatte an einem Werkzeughalter angeordnet sind, wobei die erste seitliche Halter-Anlagefläche orthogonal, mit einer Abweichung von ± 3°, zu der ersten Bohrungsachse verläuft, und wobei die axiale Halter-Anlagefläche und die erste horizontale Halter-Anlagefläche orthogonal zu der ersten seitlichen Halter-Anlagefläche und quer zueinander verlaufen. Die Schneidplatte ist dadurch gekennzeichnet, dass an der Erhöhung ferner eine zweite horizontale Halter-Anlagefläche angeordnet ist, welche von der ersten horizontalen Halter-Anlagefläche in Schneidplatten-Längsrichtung beabstandet ist, wobei ein in Schneidplatten-Längsrichtung gemessener erster Abstand (d₁) zwischen der ersten und zweiten horizontalen Halter-Anlagefläche größer ist als ein in Schneidplatten-Längsrichtung gemessener zweiter Abstand (d₂) zwischen der ersten und zweiten Bohrungsachse.

Eine bevorzugtes Werkzeug umfasst die Schneidplatte des unabhängigen Anspruchs 13, einen Werkzeughalter und zumindest ein Befestigungsmittel zur Befestigung der Schneidplatte am Werkzeughalter.

Der Werkzeughalter erstreckt sich dabei im Wesentlichen entlang einer Halter-Längsrichtung und die erste Halter-Bohrung erstreckt sich entlang einer dritten Bohrungsachse, welche im Wesentlichen orthogonal zu der Halter-Längsrichtung verläuft, wobei in der Schneidplatten-Aufnahme eine im Wesentlichen entlang der Halter-Längsrichtung verlaufende Vertiefung vorgesehen ist, und wobei in der Vertiefung eine seitliche Schneidplatten-Anlagefläche, eine axiale Schneidplatten-Anlagefläche und eine horizontale Schneidplatten-Anlagefläche zur Anlage der Schneidplatte an dem Werkzeughalter angeordnet sind, wobei die seitliche Schneidplatten-Anlagefläche im Wesentlichen orthogonal zu der dritten Bohrungsachse verläuft, und wobei die axiale Schneidplatten-Anlagefläche und die horizontale Schneidplatten-Anlagefläche im Wesentlichen orthogonal zu der seitlichen Schneidplatten-Anlagefläche und quer zueinander verlaufen.

Es versteht sich, dass die oben beschriebenen und nachfolgend noch zu beschreibenden Merkmale der vorliegenden Erfindung nicht nur in der konkret genannten Kombination, sondern in beliebigen anderen Kombinationen ebenfalls Verwendung finden können, ohne den Rahmen der vorliegenden Erfindung zu verlassen.

Ein Ausführungsbeispiel einer erfindungsgemäßen Schneidplatte und ein mit dieser ausgestaltetes Werkzeug ist in den nachfolgen Zeichnungen dargestellt und wird in der nachfolgenden Beschreibung näher erläutert.

Es zeigen:
- Fig. 1: eine perspektivische Ansicht eines Ausführungsbeispiels eines ersten Werkzeugs, das mit einer erfindungsgemäßen Schneidplatte ausgestaltet ist;
- Fig. 2: eine Explosionsdarstellung des Ausführungsbeispiels des Werkzeugs der Fig. 1;
- Fig. 3: eine Seitenansicht eines vorderen Endes des Werkzeughalters des Werkzeugs der Fig. 1;
- Fig. 4: eine erste Seitenansicht eines mittleren Bereichs der Schneidplatte des Werkzeugs der Fig. 1;
- Fig. 5: eine zweite Seitenansicht der gesamten Schneidplatte des Werkzeugs der Fig. 1;
- Fig. 6: eine perspektivische Ansicht eines zweiten Werkzeugs mit einer Schneidplatte, die nicht erfindungsgemäß ist;
- Fig. 7: eine Explosionsdarstellung des zweiten Werkzeugs;
- Fig. 8: eine Seitenansicht des vorderen Endes des Werkzeughalters des zweiten Werkzeugs;
- Fig. 9: eine erste Seitenansicht des mittleren Bereichs der Schneidplatte des zweiten Werkzeugs; und
- Fig. 10: eine zweite Seitenansicht der gesamten Schneidplatte des zweiten Werkzeugs.

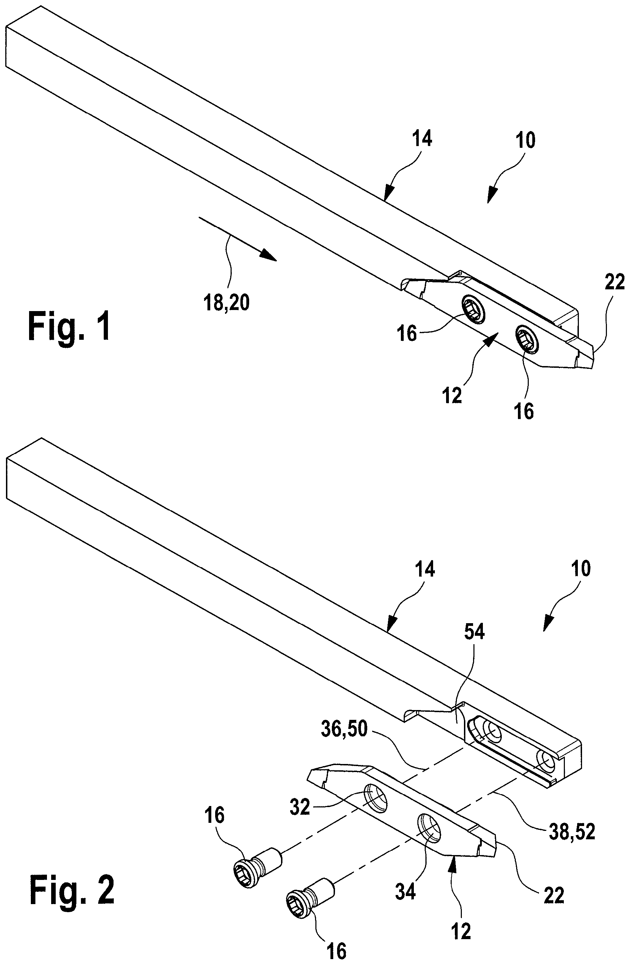

Die Fig. 1-5 zeigen verschiedene Ansichten eines Werkzeugs, das eine erfindungsgemäße Schneidplatte umfasst. Das Werkzeug ist darin in seiner Gesamtheit mit der Bezugsziffer 10 bezeichnet. Die Schneidplatte ist mit der Bezugsziffer 12 bezeichnet. Der Werkzeughalter ist mit der Bezugsziffer 14 bezeichnet.

Bei dem Werkzeug 10 handelt es sich um ein sogenanntes Langdreh-Werkzeug. Die Schneidplatte 12 ist mithilfe von Befestigungsmitteln 16 austauschbar am Werkzeughalter 14 angebracht. Die Befestigungsmittel 16 sind vorzugsweise in Form von einer oder mehrerer Schrauben realisiert. Die Schneidplatte 12 kann daher bei Verschleiß durch eine neue Schneidplatte gleicher Art ersetzt werden. Die Schneidplatte 12 ist vorzugsweise aus Hartmetall hergestellt. Der Werkzeughalter 14 ist vorzugsweise aus Stahl hergestellt.

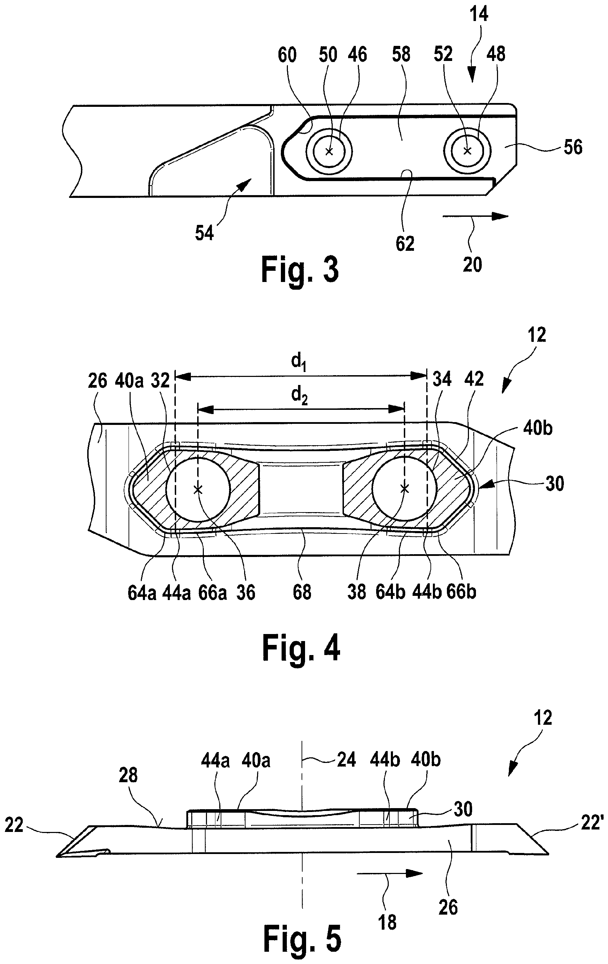

Sowohl die Schneidplatte 12 als auch der Werkzeughalter 14 besitzen eine längliche Form. Die Schneidplatte 12 erstreckt sich im Wesentlichen entlang einer Schneidplatten-Längsrichtung 18 (in Fig. 5 mit Pfeil 18 angedeutet). Der Werkzeughalter 4 erstreckt sich im Wesentlichen entlang einer Halter-Längsrichtung 20 (in Fig. 3 mit Pfeil 20 angedeutet). Die Schneidplatten-Längsrichtung 18 und die Halter-Längsrichtung 20 fallen im zusammengebauten Zustand des Werkzeugs 10 zusammen bzw. verlaufen parallel zueinander (siehe Fig. 1).

Die Schneidplatte 12 ist vorzugsweise als Wendeschneidplatte ausgestaltet. Sie besitzt vorzugsweise zwei Schneiden: eine erste Schneide 22 und eine zweite Schneide 22'. Die Schneidplatte 12 ist um eine Querachse 24 (siehe Fig. 5) 180° drehsymmetrisch. Sie lässt sich daher also in zwei verschiedenen Positionen am Werkzeughalter 14 einsetzen, so dass nacheinander sowohl die erste Schneide 22 als auch die zweite Schneide 22' verwendet werden können. Es versteht sich jedoch, dass es sich bei der Schneidplatte 12 nichts zwangsläufig um eine derartige zweischneidige Wendeschneidplatte handeln muss. Grundsätzlich wäre auch eine einschneidige Schneidplatte 12 denkbar, ohne den Rahmen der vorliegenden Erfindung zu verlassen.

Die Schneidplatte 12 besitzt einen Grundkörper 26, an dessen in Schneidplatten-Längsrichtung 18 gegenüberliegenden Enden die Schneiden 22 und 22' angeordnet sind. Auf einer Seite 28 des Grundkörpers 26 weist die Schneidplatte 12 eine Erhöhung 30 auf. Diese Erhöhung 30 steht seitlich von dem Grundkörper 26 ab und ist integral mit diesem verbunden. Die Erhöhung 30 hat eine im Wesentlichen längliche Form und erstreckt sich entlang der Seite 28 des Grundkörpers 26 im Wesentlichen parallel zu der Schneidplatten-Längsrichtung 18.

Gemäß dem in den Fig. 1-5 gezeigten ersten Werkzeug besitzt die Schneidplatte 12 zwei Bohrungen 32, 34. Diese Bohrungen werden vorliegend als erste Schneidplatten-Bohrung 32 und zweite Schneidplatten-Bohrung 34 bezeichnet. Die erste Schneidplatten-Bohrung 32 erstreckt sich entlang einer ersten Bohrungsachse 36. Die zweite Schneidplatten-Bohrung 34 erstreckt sich entlang einer zweiten Bohrungsachse 38. Die erste Bohrungsachse 36 und die zweite Bohrungsachse 38 verlaufen parallel zueinander sowie parallel zu der Querachse 24 und orthogonal zur Längsrichtung bzw. Längsachse 18 der Schneidplatte 12.

Wie insbesondere aus Fig. 3 ersichtlich ist, erstreckt sich die Erhöhung 30 nicht über die Gesamthöhe und auch nicht über die Gesamtlänge der Schneidplatte 12, sondern jeweils nur über einen Teil der Höhe und Länge der Schneidplatte 12, wobei unter der Länge der Schneidplatte 12 die parallel zur Schneidplatten-Längsrichtung 18 gemessene Dimension verstanden wird, und wobei unter der Höhe der Schneidplatte 12 die orthogonal zur Schneidplatten-Längsrichtung 18 sowie orthogonal zur ersten Bohrungsachse 36 gemessene Dimension verstanden wird.

Die Schneidplatte 12 weist ferner mehrere Anlageflächen 40, 42, 44 auf, mit denen die Schneidplatte 12 in zusammengebautem Zustand des Werkzeugs 10 an dem Werkzeughalter 14 anliegt. Diese Anlageflächen 40, 42, 44 sind allesamt an der Erhöhung 30 angeordnet. Vorzugsweise kontaktiert die Schneidplatte 12 den Werkzeughalter 14 in zusammengebautem Zustand des Werkzeugs 10 lediglich mit diesen Anlageflächen 40, 42, 44. Die Erhöhung 30 bildet somit also seitens der Schneidplatte 12 die Schnittstelle für die Verbindung zwischen Schneidplatte 12 und Werkzeughalter 14.

Gemäß des in den Fig. 1-5 gezeigten Ausführungsbeispiels liegt die Schneidplatte 12 mit insgesamt fünf Anlageflächen 40 42, 44 am Halter 14 an. Zwei dieser fünf Anlageflächen werden vorliegend als erste und zweite seitliche Halter-Anlagefläche 40a, 40b bezeichnet. Eine weitere dieser fünf Anlageflächen wird vorliegend als axiale Halter-Anlagefläche 42 bezeichnet. Die letzten beiden der fünf Anlageflächen werden vorliegend als erste und zweite horizontale Halter-Anlageflächen 44a, 44b bezeichnet.

Die erste seitliche Halter-Anlagefläche 40a und die zweite seitliche Halter-Anlagefläche 40b sind auf der Stirnseite der Erhöhung 30 angeordnet. Diese verlaufen orthogonal zu der Querachse 24, und demnach auch orthogonal zu den Bohrungsachsen 36, 38. Die beiden seitlichen Halter-Anlageflächen 40a und 40b liegen vorzugsweise in der gleichen Ebene. Es handelt sich jedoch um zwei getrennte Flächen, welche entlang der Längsrichtung 18 der Schneidplatte 12 voneinander beabstandet sind. Die erste seitliche Halter-Anlagefläche 40a grenzt vorzugsweise unmittelbar an die Schneidplatten-Bohrung 32 an und umgibt diese vorzugsweise vollständig. Die zweite seitliche Halter-Anlagefläche 40b grenzt vorzugsweise unmittelbar an die zweite Schneidplatten-Bohrung 34 an und umgibt diese vorzugsweise vollständig.

Die axiale Halter-Anlagefläche 42 verläuft vorzugsweise orthogonal zu der ersten und der zweiten seitlichen Halter-Anlagefläche 40a, 40b. Sie schließt mit der Längsrichtung 18 der Schneidplatte 12 einen spitzen Winkel ein, welcher vorzugsweise 45° beträgt.

Die erste horizontale Halter-Anlagefläche 44a und die zweite horizontale Halter-Anlagefläche 44b verlaufen ebenfalls vorzugsweise orthogonal zu den seitlichen Halter-Anlageflächen 40a, 40b. Sie verlaufen vorzugsweise parallel zu den Schneidplatten-Bohrungen 32, 34 sowie im Wesentlichen parallel zur Schneidplatten-Längsrichtung 18. Ähnlich wie bei den seitlichen Halter-Anlageflächen 40a, 40b handelt es sich auch bei den horizontale Halter-Anlageflächen 44a, 44b um voneinander getrennte Flächen, welche in in Schneidplatten-Längsrichtung 18 voneinander beabstandet sind.

Vorzugsweise liegt die zweite horizontale Halter-Anlagefläche 44b in der gleichen Ebene mit der ersten horizontalen Halter-Anlagefläche 44a. Beide horizontalen Halter-Anlageflächen 44a, 44b verlaufen in der Praxis jedoch nicht exakt parallel zueinander und zur Schneidplatten-Längsrichtung 18, da sich diese beiden Flächen sinterroh nicht exakt horizontal fertigen lassen. Gemäß einer bevorzugten Ausgestaltung sind die beiden horizontalen Halter-Anlagefläche daher um 0°-3° relativ zur Schneidplatten-Längsrichtung 18 geneigt. Allerdings sollten sie Flächen nur so geneigt sein, dass der Abstand zwischen den beiden horizontalen Anlageflächen durch die Neigung nicht kleiner, sondern nur größer ist als im Vergleich zu exakt horizontalen Flächen.

Bei den genannten fünf Anlageflächen 40a, 40b, 42, 44a, 44b, welche allesamt an der Erhöhung 30 der Schneidplatte 12 angeordnet sind, handelt es sich vorzugsweise jeweils um planare Flächen.

Es versteht sich, dass aufgrund der oben beschriebenen Drehsymmetrie der Schneidplatte 12 an der Erhöhung 30 nicht nur die in Fig. 4 auf der rechten Seite eingezeichnete axiale Halter-Anlagefläche 42 existiert, sondern entsprechend dazu auf der diagonal gegenüberliegenden Seite der Erhöhung 30 noch eine weitere axiale Halter-Anlagefläche (nicht nummeriert) existiert. Ebenso existieren zusätzlich zu den in Fig. 4 auf der Unterseite der Erhöhung 30 gekennzeichneten, horizontalen Halter-Anlageflächen 44a, 44b auf der gegenüberliegenden Oberseite der Erhöhung 30 auch zwei weitere, hier nicht nummerierte, horizontale Halter-Anlageflächen. Die Art der Anlage der Schneidplatte 12 am Werkzeughalter 14 ist daher die gleiche, unabhängig davon, welche der beiden Schneiden 22, 22' zum Einsatz kommt. In beiden Fällen liegt die Schneidplatte 12 gemäß des in den Fig. 1-5 gezeigten ersten Ausführungsbeispiels mit zwei horizontalen Halter-Anlageflächen 44a, 44b, einer axialen Halter-Anlagefläche 42 und den beiden seitlichen Halter-Anlageflächen 40a, 40b am Werkzeughalter 14 an.

Fig. 3 zeigt im Detail die entsprechende Schnittstelle an dem Werkzeughalter 14. Ebenso wie die Schneidplatte 12 weist auch der Werkzeughalter 14 zwei Bohrungen 46, 48 auf. Diese werden vorliegend als erste Halter-Bohrung 46 sowie als zweite Halter-Bohrung 48 bezeichnet. Die erste Halter-Bohrung 46 erstreckt sich entlang der dritten Bohrungsachse 50. Die zweite Halter-Bohrung 48 erstreckt sich entlang einer vierten Bohrungsachse 52. Im zusammengebauten Zustand des Werkzeugs 10 fällt die dritte Bohrungsachse 50 mit der ersten Bohrungsachse 36 zusammen. Ebenso fallen dann auch die vierte Bohrungsachse 52 und die zweite Bohrungsachse 38 zusammen (siehe Fig. 2).

Zur Aufnahme der Schneidplatte 12 weist der Werkzeughalter 14 im Bereich seines vorderen Endes eine Schneidplatten-Aufnahme 54 auf. Diese Schneidplatten-Aufnahme 54 ist als eine Art Material-Aussparung am Werkzeughalter 14 realisiert. Äquivalent zu der an der Schneidplatte 12 vorgesehenen Erhöhung 30 ist in der Schneidplatten-Aufnahme 54 eine Vertiefung 56 vorgesehen, welche sich im Wesentlichen entlang der Halter-Längsrichtung 20 erstreckt. Die Halter-Bohrungen 46, 48 münden in den Grund dieser Vertiefung 56.

Korrespondierend zu den an der Schneidplatte 12 vorgesehenen Halter-Anlageflächen 40, 42, 44 weist die in der Schneidplatten-Aufnahme 54 des Werkzeughalters 14 vorgesehene Vertiefung 56 drei Anlageflächen 58, 60, 62 auf. Diese drei Anlageflächen werden als seitliche Schneidplatten-Anlagefläche 58, als axiale Schneidplatten-Anlagefläche 60 sowie als horizontale Schneidplatten-Anlagefläche 62 bezeichnet. Im zusammengebauten Zustand des Werkzeugs 10 legt die Schneidplatte 12 mit ihren Halter-Anlageflächen 40, 42, 44 an den Anlageflächen 58, 60, 62 des Werkzeughalters 14 an. Dabei liegen die beiden seitlichen Halter-Anlageflächen 40a, 40b der Schneidplatte 12 an der seitlichen Schneidplatten-Anlagefläche 58 des Werkzeughalters 14 an. Die axiale Halter-Anlagefläche 42 der Schneidplatte 12 liegt an der axialen Schneidplatten-Anlagefläche 60 des Werkzeughalters 14 an. Die beiden horizontalen Halter-Anlageflächen 44a, 44b der Schneidplatte 12 liegen an der horizontalen Schneidplatten-Anlagefläche 62 des Werkzeughalters 14 an.

Die seitliche Schneidplatten-Anlagefläche 58 ist vorzugsweise als eine durchgehende, planare Fläche ausgestaltet. Ebenso ist auch die horizontale Schneidplatten-Anlagefläche 62 als planare Fläche ausgestaltet. Die axiale Schneidplatten-Anlagefläche 60 ist hingegen vorzugsweise als konvex geformte Fläche ausgestaltet. In Axialrichtung entsteht somit zwischen der axialen Halter-Anlagefläche 42 und der axialen Schneidplatten-Anlagefläche 60 eine Linienanlage. An der Kontaktfläche zwischen den horizontalen Halter-Anlageflächen 44a, 44b und der horizontalen Schneidplatten-Anlagefläche 62 ist hingegen jeweils eine flächige Anlage bevorzugt. Es versteht sich jedoch, dass es auch an dieser Stelle zu einer linienförmigen Anlage kommen kann, wenn die horizontalen Halter-Anlageflächen 44a, 44b in Schneidplatten-Längsrichtung 18 betrachtet infinitesimal klein gewählt sind oder leicht geneigt sind (um maximal 3°) relativ zur Schneidplatten-Längsrichtung 18. Im Sinne des vorliegenden Patents sollen auch solche Ausgestaltungen nach wie vor unter dem Begriff horizontale Halter-Anlagefläche fallen, da sie zur horizontalen Anlage der Schneidplatte dienen.

Um eine möglichst exakte horizontale Anlage zu erzeugen, haben die horizontalen Halter-Anlageflächen 44a, 44b ohnehin eine relativ geringe, in Schneidplatten-Längsrichtung 18 gemessene Breite. Beide horizontalen Halter-Anlageflächen 44a, 44b grenzen an ihren beiden, in Schneidplatten-Längsrichtung gegenüberliegenden Enden jeweils an eine konvex geformte Fläche 64a, 64b, 66a, 66b an (siehe Fig. 4). Zwischen den beiden horizontalen Halter-Anlageflächen 44a, 44b ist gemäß dem ersten Ausführungsbeispiel zudem eine konkav geformte Fläche 68 vorgesehen. Die horizontale Anlage der Schneidplatte 12 erfolgt somit tatsächlich ausschließlich an den beiden horizontalen Halter-Anlageflächen 44a, 44b.

Um ein Verkippen der Schneidplatte 12 um die Querachse 24 während des Anziehens der Befestigungsmittel 16 zu vermeiden, aber auch um die Stabilität und Präzision der horizontalen Anlage der Schneidplatte 12 zu erhöhen, ist der Abstand zwischen den beiden horizontalen Halter-Anlageflächen 44a, 44b vorzugsweise relativ groß gewählt. Dieser Abstand ist in Fig. 4 als erster Abstand d₁ bezeichnet. Der Abstand d₁ ist vorzugsweise größer gewählt als ein zweiter Abstand d₂, welchen die Bohrungsachsen 36, 38 voneinander haben.

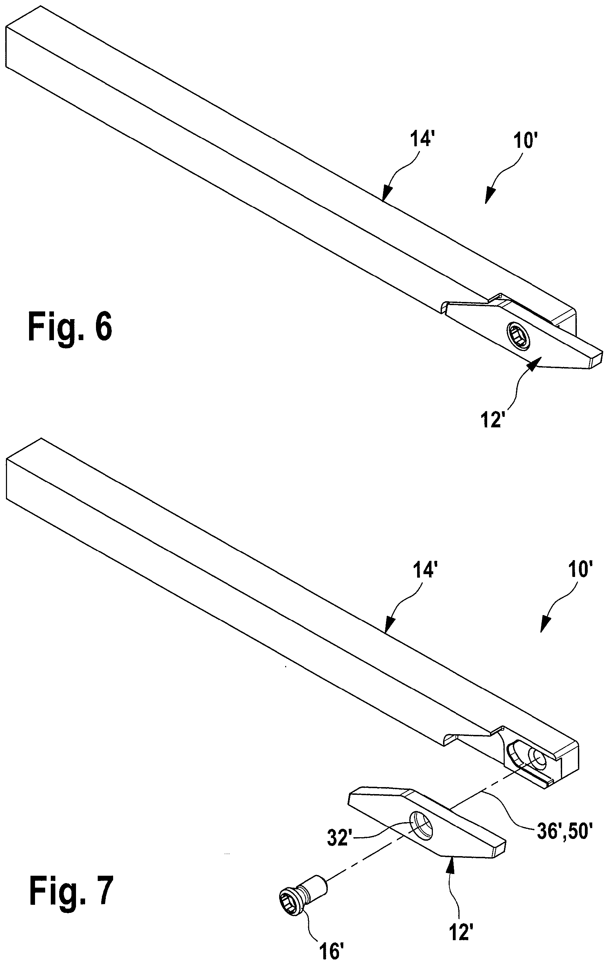

Die Fig. 6-10 zeigen ein zweites Werkzeug 10, das nicht unter die Ansprüche fällt. Äquivalente Vorteile und Merkmale sind darin mit den gleichen Bezugsziffern bezeichnet wie zuvor, allerdings zusätzlich mit einem Strich versehen (z.B. 10' statt 10). Da die grundsätzliche Idee auch bei diesem zweiten Werkzeug die gleiche ist wie bei dem zuvor im Detail erläuterten ersten Werkzeug, wird nachfolgend lediglich auf die Unterschiede der beiden Werkzeuge eingegangen. Der grundsätzliche Aufbau der Schneidplatte 12' und des Werkzeughalters 14' wird nicht nochmals erneut erläutert. Das oben Erwähnte soll hier äquivalent gelten.

Wie durch Vergleich der Fig. 1-5 mit den Fig. 6-10 ersichtlich ist, ist das Prinzip, die Anlageflächen der Schneidplatte 12' an der Erhöhung 30' vorzusehen und die Anlageflächen des Werkzeughalters 14' in der Vertiefung 56' vorzusehen, auch bei dem zweiten Werkzeug äquivalent realisiert. Auch hier liegt die Schneidplatte 12 im zusammengebauten Zustand des Werkzeugs 10' lediglich mit den an der Erhöhung 30' vorgesehenen Anlageflächen am Werkzeughalter 14' an. Eine Berührung zwischen Schneidplatte 12' und Werkzeughalter 14' erfolgt somit auch lediglich zwischen der Erhöhung 30' und der Vertiefung 56'.

Im Gegensatz zu dem in den Fig. 1-5 gezeigten ersten Werkzeug ist die Erhöhung 30' in Schneidplatten-Längsrichtung 18 jedoch kürzer ausgeführt. Die Schneidplatte 12' weist nur eine Bohrung 32' auf. Äquivalent dazu weist auch der Werkzeughalter 14' nur eine Bohrung 46' auf. Die erste Schneidplatten-Bohrung 32' erstreckt sich entlang der ersten Bohrungsachse 36'. Die erste Halter-Bohrung 46' erstreckt sich entlang der dritten Bohrungsachse 50'. Die erste Bohrungsachse 36' und die dritte Bohrungsachse 50' fallen im zusammengebauten Zustand des Werkzeugs 10' wiederum zusammen (siehe Fig. 7).

Anstelle von zwei seitlichen Halter-Anlageflächen ist gemäß des zweiten Ausführungsbeispiels nur eine seitliche Halter-Anlagefläche 40a' vorgesehen. Ebenso ist auch nur eine horizontale Halter-Anlagefläche 44a' vorgesehen. Ähnlich wie gemäß des ersten Ausführungsbeispiels grenzt diese an ihren beiden gegenüberliegenden Enden an jeweils eine konvex geformte Fläche 64a' und 66a'. In horizontaler Richtung weisen die Schneidplatten 12, 12' beider Werkzeuge lediglich eine axiale Halter-Anlagefläche 42 bzw. 42' auf. Die Anordnung und Ausrichtung dieser Halter-Anlageflächen 40a', 42', 44a' sind jedoch äquivalent zu der Anordnung und Ausrichtung der Halter-Anlageflächen 40a, 42, 44a gemäß des ersten Werkzeugs gewählt.

Weniger Veränderungen zwischen dem ersten und zweiten Ausführungsbeispiel ergeben sich für die am Werkzeughalter 14' vorgesehene Schneidplatten-Aufnahme 54'. Die Vertiefung 56' weist auch hier eine vorzugsweise durchgängige, planare seitliche Schneidplatten-Anlagefläche 58' auf. Ebenso ist in der Vertiefung 46' eine vorzugsweise konvex geformte axiale Schneidplatten-Anlagefläche 60' vorgesehen. Auch die horizontale Anlage ist vorzugsweise mithilfe einer durchgängigen, planaren horizontalen Schneidplatte-Anlagefläche 62' gewährleistet.

Zusätzlich zu der sehr stabilen und exakten Positionierung der Schneidplatte 12 bzw. 12' am Werkzeughalter 14 bzw. 14' ergibt sich gemäß beiden Ausführungsbeispielen der Vorteil, dass die Schneidplatte 12 bzw. 12' trotz relativ kleiner Abmessungen des Werkzeughalters 14 bzw. 14' vergleichsweise groß sein kann. Aufgrund der Tatsache, dass die Verbindung zwischen Schneidplatte 12 bzw. 12' und Werkzeughalter 14 bzw. 14' lediglich durch das Zusammenwirken der Erhöhung 30 bzw. 30' mit der Vertiefung 56 bzw. 56' erfolgt, kann die Schneidplatte 12 bzw. 12' eine ähnliche oder sogar gleich große Höhe haben wie der Werkzeughalter 14 bzw. 14'. Mit Höhe ist hier die Dimension orthogonal zu den Längsrichtungen 18, 20 sowie orthogonal zu den Bohrungsachsen 36, 38, 50, 52 gemeint. Wenn der Werkzeughalter 14 bzw. 14' für spezielle Anwendungen sehr klein ausgeführt ist, also zum Beispiel eine Querschnittsgröße von 6 x 6 mm hat, kann die Schneidplatte 12 bzw. 12' beispielsweise dennoch eine Höhe von 6 mm haben.

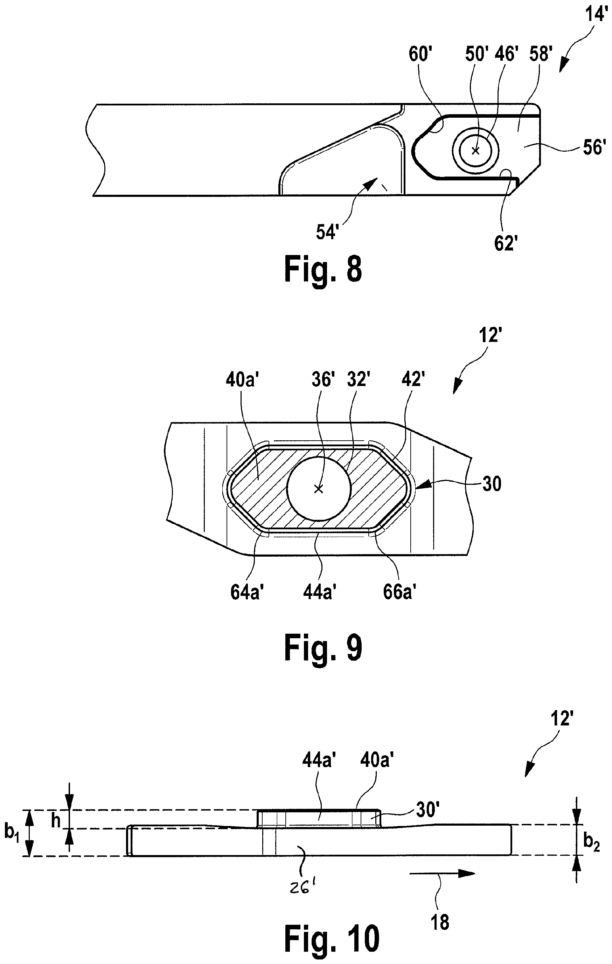

Wie aus Fig. 10 weiterhin ersichtlich ist, hat die Schneidplatte 12' eine parallel zu der ersten Bohrungsachse 36 gemessene Gesamtbreite b₁, welche kleiner ist als die Summe der parallel zur ersten Bohrungsachse 36 gemessenen Breite b₂ der ersten Schneide 22 und einer parallel zur ersten Bohrungsachse 36 gemessenen Höhe h der Erhöhung 30'. Es gilt also: b₂ + h > b₁. Selbiges gilt auch für die Schneidplatte 12 gemäß des ersten Werkzeugs. Der Grundkörper 26 bzw. 26' der Schneidplatte 12 bzw. 12' ist, im Bereich der ersten Schneide 22 also breiter ausgestaltet als im mittleren Bereich des Grundkörpers 26 bzw. 26', an welchem die Erhöhung 30 bzw. 30' angeordnet ist. Dadurch kann die Erhöhung 30 bzw. 30' bei gleicher Schneidplatten-Gesamtbreite b₁ höher ausgeführt werden. Dies wiederum ermöglicht größere Anlageflächen 40, 42, 44, welche an der Erhöhung 30 angeordnet sind.

## Patentansprüche

1. Schneidplatte (12) für ein Werkzeug (10) zur spanenden Bearbeitung eines Werkstücks, mit einer ersten Schneide (22) und einer ersten Schneidplatten-Bohrung (32), wobei die Schneidplatte (12) eine im Wesentlichen längliche Form hat und sich im Wesentlichen entlang einer Schneidplatten-Längsrichtung (18) erstreckt, wobei sich die erste Schneidplatten-Bohrung (32) entlang einer ersten Bohrungsachse (36) erstreckt, welche orthogonal, mit einer Abweichung von ± 3°, zu der Schneidplatten-Längsrichtung (18) verläuft, wobei die Schneidplatte (12) eine seitlich hervorstehende Erhöhung (30) aufweist, welche auf einer quer zu der ersten Bohrungsachse (36) ausgerichteten Seite (28) der Schneidplatte (12) angeordnet ist, und wobei an der Erhöhung (30) eine erste seitliche Halter-Anlagefläche (40a), eine axiale Halter-Anlagefläche (42) und eine erste horizontale Halter-Anlagefläche (44a) zur Anlage der Schneidplatte (12) an einem Werkzeughalter (14) angeordnet sind, wobei die erste seitliche Halter-Anlagefläche (40a) orthogonal, mit einer Abweichung von ± 3°, zu der ersten Bohrungsachse (36) verläuft, und wobei die axiale Halter-Anlagefläche (42) und die erste horizontale Halter-Anlagefläche (44a) orthogonal, mit einer Abweichung von ± 3°, zu der ersten seitlichen Halter-Anlagefläche (40a) und quer zueinander verlaufen, wobei die Schneidplatte (12) ferner eine zweite Schneidplatten-Bohrung (34) aufweist, welche sich entlang einer zweiten Bohrungsachse (38) erstreckt, die parallel zu der ersten Bohrungsachse (36) ausgerichtet ist, und wobei sowohl die erste als auch die zweite Schneidplatten-Bohrung (32, 34) die Erhöhung (30) orthogonal zu der ersten seitlichen Halter-Anlagefläche (40a) durchdringen,
**gekennzeichnet dadurch, dass** an der Erhöhung (30) ferner eine zweite seitliche Halter-Anlagefläche (40b) angeordnet ist, welche in einer gleichen Ebene mit der ersten seitlichen Halter-Anlagefläche (40a) liegt und von dieser in Schneidplatten-Längsrichtung (18) beabstandet ist, wobei die erste seitliche Halter-Anlagefläche (40a) die erste Schneidplatten-Bohrung (32) zumindest teilweise umgibt, und wobei die zweite seitliche Halter-Anlagefläche (40b) die zweite Schneidplatten-Bohrung (34) zumindest teilweise umgibt.

2. Schneidplatte gemäß Anspruch 1, wobei die erste seitliche Halter-Anlagefläche (40a) die erste Schneidplatten-Bohrung (32) vollständig umgibt und/oder wobei die zweite seitliche Halter-Anlagefläche (40b) die zweite Schneidplatten-Bohrung (34) vollständig umgibt.

3. Schneidplatte gemäß Anspruch 1 oder 2, wobei die erste seitliche Halter-Anlagefläche (40a) und/oder die zweite seitliche Halter-Anlagefläche (40b) eine geschliffene Fläche ist, und wobei die axiale Halter-Anlagefläche (42) und die erste horizontale Halter-Anlagefläche (44a) sinterrohe Flächen sind.

4. Schneidplatte gemäß einem der Ansprüche 1 bis 3, wobei die axiale Halter-Anlagefläche (42) und die erste horizontale Halter-Anlagefläche (44a) einen spitzen Winkel untereinander einschließen.

5. Schneidplatte gemäß einem der Ansprüche 1 bis 4, wobei die Schneidplatte (12) eine parallel zur ersten Bohrungsachse (36) gemessene Gesamtbreite (b₁) hat, welche kleiner ist als die Summe aus einer parallel zur ersten Bohrungsachse (36) gemessenen Breite (b₂) der ersten Schneide (22) und einer parallel zur ersten Bohrungsachse (36) gemessenen Höhe (h) der Erhöhung (30).

6. Schneidplatte gemäß Anspruch 1, wobei an der Erhöhung (30) ferner eine zweite horizontale Halter-Anlagefläche (44b) angeordnet ist, welche von der ersten horizontalen Halter-Anlagefläche (44a) in Schneidplatten-Längsrichtung (18) beabstandet ist.

7. Schneidplatte gemäß Anspruch 6, wobei ein in Schneidplatten-Längsrichtung (18) gemessener erster Abstand (d₁) zwischen der ersten und zweiten horizontalen Halter-Anlagefläche (44a, 44b) größer ist als ein in Schneidplatten-Längsrichtung (18) gemessener zweiter Abstand (d₂) zwischen der ersten und zweiten Bohrungsachse (36, 38).

8. Schneidplatte gemäß einem der Ansprüche 1 bis 7, wobei die erste horizontale Halter-Anlagefläche (44a) an einem ersten Ende an eine, an der Erhöhung (30) angeordnete, erste konvex geformte Fläche (64a) angrenzt und an einem in Schneidplatten-Längsrichtung (18) betrachtet gegenüberliegenden, zweiten Ende an eine, an der Erhöhung (30) angeordnete, zweite konvex geformte Fläche (66a) angrenzt.

9. Schneidplatte gemäß Anspruch 6 und 8, wobei an der Erhöhung (30) ferner eine konkav geformte Fläche (68) vorgesehen ist, welche in Schneidplatten-Längsrichtung (18) zwischen der ersten und der zweiten horizontalen Halter-Anlagefläche (44a, 44b) angeordnet ist.

10. Schneidplatte gemäß einem der Ansprüche 1 bis 9, wobei eine orthogonal zu der ersten Bohrungsachse (36) sowie orthogonal zu der Schneidplatten-Längsrichtung (18) gemessene Breite der Erhöhung (30) kleiner als eine parallel dazu gemessene Gesamthöhe der Schneidplatte (12) ist.

11. Werkzeug (10) zur spanenden Bearbeitung eines Werkstücks, mit einer Schneidplatte (12) gemäß Anspruch 1, einem Werkzeughalter (14) mit einer Schneidplatten-Aufnahme (54) zur Aufnahme der Schneidplatte (12) und mit einer ersten Halter-Bohrung (46), wobei sich der Werkzeughalter (14) im Wesentlichen entlang einer Halter-Längsrichtung (20) erstreckt und sich die erste Halter-Bohrung (46) entlang einer dritten Bohrungsachse (50) erstreckt, welche im Wesentlichen orthogonal zu der Halter-Längsrichtung (20) verläuft, wobei in der Schneidplatten-Aufnahme (54) eine im Wesentlichen entlang der Halter-Längsrichtung (20) verlaufende Vertiefung (56) vorgesehen ist, und wobei in der Vertiefung (56) eine seitliche Schneidplatten-Anlagefläche (58), eine axiale Schneidplatten-Anlagefläche (60) und eine horizontale Schneidplatten-Anlagefläche (62) zur Anlage der Schneidplatte (12) an dem Werkzeughalter (14) angeordnet sind, wobei die seitliche Schneidplatten-Anlagefläche (58) im Wesentlichen orthogonal zu der dritten Bohrungsachse (50) verläuft, und wobei die axiale Schneidplatten-Anlagefläche (60) und die horizontale Schneidplatten-Anlagefläche (62) im Wesentlichen orthogonal zu der seitlichen Schneidplatten-Anlagefläche (58) und quer zueinander verlaufen, und zumindest einem Befestigungsmittel (16) zur Befestigung der Schneidplatte (12) am Werkzeughalter (14).

12. Werkzeug (10) gemäß Anspruch 11, wobei die Schneidplatte (12) und der Werkzeughalter (14) ausschließlich mit der an der Schneidplatte (12) angeordneten Erhöhung (30) und der in der Schneidplatten-Aufnahme (54) des Werkzeughalters (14) vorgesehenen Vertiefung (56) aneinander anliegen.

13. Schneidplatte (12) für ein Werkzeug (10) zur spanenden Bearbeitung eines Werkstücks, mit einer ersten Schneide (22) und einer ersten Schneidplatten-Bohrung (32), wobei die Schneidplatte (12) eine im Wesentlichen längliche Form hat und sich im Wesentlichen entlang einer Schneidplatten-Längsrichtung (18) erstreckt, wobei sich die erste Schneidplatten-Bohrung (32) entlang einer ersten Bohrungsachse (36) erstreckt, welche orthogonal, mit einer Abweichung von ± 3°, zu der Schneidplatten-Längsrichtung (18) verläuft, wobei die Schneidplatte (12) eine seitlich hervorstehende Erhöhung (30) aufweist, welche auf einer quer zu der ersten Bohrungsachse (36) ausgerichteten Seite (28) der Schneidplatte (12) angeordnet ist, und wobei an der Erhöhung (30) eine erste seitliche Halter-Anlagefläche (40a), eine axiale Halter-Anlagefläche (42) und eine erste horizontale Halter-Anlagefläche (44a) zur Anlage der Schneidplatte (12) an einem Werkzeughalter (14) angeordnet sind, wobei die erste seitliche Halter-Anlagefläche (40a) orthogonal, mit einer Abweichung von ± 3°, zu der ersten Bohrungsachse (36) verläuft, und wobei die axiale Halter-Anlagefläche (42) und die erste horizontale Halter-Anlagefläche (44a) orthogonal, mit einer Abweichung von ± 3°, zu der ersten seitlichen Halter-Anlagefläche (40a) und quer zueinander verlaufen, wobei die Schneidplatte (12) ferner eine zweite Schneidplatten-Bohrung (34) aufweist, welche sich entlang einer zweiten Bohrungsachse (38) erstreckt, die parallel zu der ersten Bohrungsachse (36) ausgerichtet ist, und wobei sowohl die erste als auch die zweite Schneidplatten-Bohrung (32, 34) die Erhöhung (30) orthogonal zu der ersten seitlichen Halter-Anlagefläche (40a) durchdringen,
**gekennzeichnet dadurch, dass** an der Erhöhung (30) ferner eine zweite horizontale Halter-Anlagefläche (44b) angeordnet ist, welche von der ersten horizontalen Halter-Anlagefläche (44a) in Schneidplatten-Längsrichtung (18) beabstandet ist, wobei ein in Schneidplatten-Längsrichtung (18) gemessener erster Abstand (d₁) zwischen der ersten und zweiten horizontalen Halter-Anlagefläche (44a, 44b) größer ist als ein in Schneidplatten-Längsrichtung (18) gemessener zweiter Abstand (d₂) zwischen der ersten und zweiten Bohrungsachse (36, 38).

14. Werkzeug (10) zur spanenden Bearbeitung eines Werkstücks, mit einer Schneidplatte (12) gemäß Anspruch 13, einem Werkzeughalter (14) mit einer Schneidplatten-Aufnahme (54) zur Aufnahme der Schneidplatte (12) und mit einer ersten Halter-Bohrung (46), wobei sich der Werkzeughalter (14) im Wesentlichen entlang einer Halter-Längsrichtung (20) erstreckt und sich die erste Halter-Bohrung (46) entlang einer dritten Bohrungsachse (50) erstreckt, welche im Wesentlichen orthogonal zu der Halter-Längsrichtung (20) verläuft, wobei in der Schneidplatten-Aufnahme (54) eine im Wesentlichen entlang der Halter-Längsrichtung (20) verlaufende Vertiefung (56) vorgesehen ist, und wobei in der Vertiefung (56) eine seitliche Schneidplatten-Anlagefläche (58), eine axiale Schneidplatten-Anlagefläche (60) und eine horizontale Schneidplatten-Anlagefläche (62) zur Anlage der Schneidplatte (12) an dem Werkzeughalter (14) angeordnet sind, wobei die seitliche Schneidplatten-Anlagefläche (58) im Wesentlichen orthogonal zu der dritten Bohrungsachse (50) verläuft, und wobei die axiale Schneidplatten-Anlagefläche (60) und die horizontale Schneidplatten-Anlagefläche (62) im Wesentlichen orthogonal zu der seitlichen Schneidplatten-Anlagefläche (58) und quer zueinander verlaufen, und zumindest einem Befestigungsmittel (16) zur Befestigung der Schneidplatte (12) am Werkzeughalter (14).

## Claims

1. A cutting insert (12) for a tool (10) for machining a workpiece, comprising a first cutting edge (22) and a first cutting insert bore (32), wherein the cutting insert (12) has a substantially elongate shape and extends substantially along a cutting insert longitudinal direction (18), wherein the first cutting insert bore (32) extends along a first bore axis (36), which runs orthogonally, with a deviation of ± 3°, to the cutting insert longitudinal direction (18), wherein the cutting insert (12) comprises a laterally protruding elevation (30), which is arranged on a side (28) of the cutting insert (12) that is oriented transversely to the first bore axis (36), and wherein on the elevation (30) are arranged a first lateral holder contact surface (40a), an axial holder contact surface (42) and a first horizontal holder contact surface (44a) for a bearing contact of the cutting insert (12) against a tool holder (14), wherein the first lateral holder contact surface (40a) runs orthogonally, with a deviation of ± 3°, to the first bore axis (36), and wherein the axial holder contact surface (42) and the first horizontal holder contact surface (44a) run orthogonally, with a deviation of ± 3°, to the first lateral holder contact surface (40a) and transversely to each other, wherein the cutting insert (12) further comprises a second cutting insert bore (34), which extends along a second bore axis (38) oriented parallel to the first bore axis (36), and wherein both the first and the second cutting insert bore (32, 34) pass through the elevation (30) orthogonally to the first lateral holder contact surface (40a),
**characterized in that** on the elevation (30) is further arranged a second lateral holder contact surface (40b), which lies in a same plane with the first lateral holder contact surface (40a) and is distanced therefrom in the cutting insert longitudinal direction (18), wherein the first lateral holder contact surface (40a) at least partially surrounds the first cutting insert bore (32), and wherein the second lateral holder contact surface (40b) at least partially surrounds the second cutting insert bore (34).

2. The cutting insert as claimed in claim 1, wherein the first lateral holder contact surface (40a) completely surrounds the first cutting insert bore (32), and/or wherein the second lateral holder contact surface (40b) completely surrounds the second cutting insert bore (34).

3. The cutting insert as claimed in claim 1 or 2, wherein the first lateral holder contact surface (40a) and/or the second lateral holder contact surface (40b) is a ground surface, and wherein the axial holder contact surface (42) and the first horizontal holder contact surface (44a) are 'as sintered' surfaces.

4. The cutting insert as claimed in one of claims 1 to 3, wherein the axial holder contact surface (42) and the first horizontal holder contact surface (44a) form between them an acute angle.

5. The cutting insert as claimed in one of claims 1 to 4, wherein the cutting insert (12) has a total width (b₁), measured parallel to the first bore axis (36), which is less than the sum of a width (b₂), measured parallel to the first bore axis (36), of the first cutting edge (22) and a height (h), measured parallel to the first bore axis (36), of the elevation (30).

6. The cutting insert as claimed in claim 1, wherein on the elevation (30) is further arranged a second horizontal holder contact surface (44b), which is distanced from the first horizontal holder contact surface (44a) in the cutting insert longitudinal direction (18).

7. The cutting insert as claimed in claim 6, wherein a first distance (d₁), measured in the cutting insert longitudinal direction (18), between the first and second horizontal holder contact surface (44a, 44b) is greater than a second distance (d₂), measured in the cutting insert longitudinal direction (18), between the first and second bore axis (36, 38).

8. The cutting insert as claimed in one of claims 1 to 7, wherein the first horizontal holder contact surface (44a) borders at a first end a first convexly shaped surface (64a) arranged on the elevation (30), and at an opposite second end, viewed in the cutting insert longitudinal direction (18), a second convexly shaped surface (66a) arranged on the elevation (30).

9. The cutting insert as claimed in claim 6 and 8, wherein on the elevation (30) is further provided a concavely shaped surface (68), which is arranged, in the cutting insert longitudinal direction (18), between the first and the second horizontal holder contact surface (44a, 44b).

10. The cutting insert as claimed in one of claims 1 to 9, wherein a width of the elevation (30), measured orthogonally to the first bore axis (36) and orthogonally to the cutting insert longitudinal direction (18), is less than a total height, measured parallel thereto, of the cutting insert (12).

11. A tool (10) for machining a workpiece, comprising a cutting insert (12) as claimed in claim 1, a tool holder (14) comprising a cutting insert receiving fixture (54) for the reception of a cutting insert (12), and comprising a first holder bore (46), wherein the tool holder (14) extends substantially along a holder longitudinal direction (20) and the first holder bore (46) extends along a third bore axis (50), which runs substantially orthogonally to the holder longitudinal direction (20), wherein in the cutting insert receiving fixture (54) is provided a recess (56) which extends substantially along the holder longitudinal direction (20), and wherein in the recess (56) a lateral cutting insert contact surface (58), an axial cutting insert contact surface (60) and a horizontal cutting insert contact surface (62) for the bearing contact of the cutting insert (12) against the tool holder (14) are arranged, wherein the lateral cutting insert contact surface (58) runs substantially orthogonally to the third bore axis (50), and wherein the axial cutting insert contact surface (60) and the horizontal cutting insert contact surface (62) run substantially orthogonally to the lateral cutting insert contact surface (58) and transversely to each other, and at least one fastening means (16) for fastening the cutting insert (12) to the tool holder (14).

12. A tool (10) according to claim 11, wherein the cutting insert (12) and the tool holder (14) bear one against the other solely with the elevation (30) arranged on the cutting insert (12) and with the recess (56) provided in the cutting insert receiving fixture (54) of the tool holder (14).

13. A cutting insert (12) for a tool (10) for machining a workpiece, comprising a first cutting edge (22) and a first cutting insert bore (32), wherein the cutting insert (12) has a substantially elongate shape and extends substantially along a cutting insert longitudinal direction (18), wherein the first cutting insert bore (32) extends along a first bore axis (36), which runs orthogonally, with a deviation of ± 3°, to the cutting insert longitudinal direction (18), wherein the cutting insert (12) comprises a laterally protruding elevation (30), which is arranged on a side (28) of the cutting insert (12) that is oriented transversely to the first bore axis (36), and wherein on the elevation (30) are arranged a first lateral holder contact surface (40a), an axial holder contact surface (42) and a first horizontal holder contact surface (44a) for a bearing contact of the cutting insert (12) against a tool holder (14), wherein the first lateral holder contact surface (40a) runs orthogonally, with a deviation of ± 3°, to the first bore axis (36), and wherein the axial holder contact surface (42) and the first horizontal holder contact surface (44a) run orthogonally, with a deviation of ± 3°, to the first lateral holder contact surface (40a) and transversely to each other, wherein the cutting insert (12) further comprises a second cutting insert bore (34), which extends along a second bore axis (38) oriented parallel to the first bore axis (36), and wherein both the first and the second cutting insert bore (32, 34) pass through the elevation (30) orthogonally to the first lateral holder contact surface (40a), **characterized in that** on the elevation (30) is further arranged a second horizontal holder contact surface (44b), which is distanced from the first horizontal holder contact surface (44a) in the cutting insert longitudinal direction (18), wherein a first distance (d₁), measured in the cutting insert longitudinal direction (18), between the first and second horizontal holder contact surface (44a, 44b) is greater than a second distance (d₂), measured in the cutting insert longitudinal direction (18), between the first and second bore axis (36, 38).

14. A tool (10) for machining a workpiece, comprising a cutting insert (12) as claimed in claim 13, a tool holder (14) comprising a cutting insert receiving fixture (54) for the reception of a cutting insert (12), and comprising a first holder bore (46), wherein the tool holder (14) extends substantially along a holder longitudinal direction (20) and the first holder bore (46) extends along a third bore axis (50), which runs substantially orthogonally to the holder longitudinal direction (20), wherein in the cutting insert receiving fixture (54) is provided a recess (56) which extends substantially along the holder longitudinal direction (20), and wherein in the recess (56) a lateral cutting insert contact surface (58), an axial cutting insert contact surface (60) and a horizontal cutting insert contact surface (62) for the bearing contact of the cutting insert (12) against the tool holder (14) are arranged, wherein the lateral cutting insert contact surface (58) runs substantially orthogonally to the third bore axis (50), and wherein the axial cutting insert contact surface (60) and the horizontal cutting insert contact surface (62) run substantially orthogonally to the lateral cutting insert contact surface (58) and transversely to each other, and at least one fastening means (16) for fastening the cutting insert (12) to the tool holder (14).

## Revendications

1. Plaquette de coupe (12) pour un outil (10) pour l'usinage par enlèvement de copeaux d'une pièce, comprenant une première arête de coupe (22) et un premier alésage de plaquette de coupe (32), la plaquette de coupe (12) présentant une forme essentiellement allongée et s'étendant essentiellement le long d'une direction longitudinale de plaquette de coupe (18), le premier alésage de plaquette de coupe (32) s'étendant le long d'un premier axe d'alésage (36), qui s'étend perpendiculairement à la direction longitudinale de la plaquette de coupe (18) avec un écart de ± 3°, la plaquette de coupe (12) présentant un rehaussement (30) saillant latéralement, qui est disposé sur un côté (28) de la plaquette de coupe (12) orienté transversalement au premier axe d'alésage (36), et une première surface d'appui de support latérale (40a), une surface d'appui de support axiale (42) et une première surface d'appui de support horizontale (44a) étant disposées au niveau du rehaussement (30) pour l'appui de la plaquette de coupe (12) contre un porte-outil (14), la première surface d'appui de support latérale (40a) s'étendant perpendiculairement, avec un écart de ± 3°, au premier axe d'alésage (36), et la surface d'appui de support axiale (42) et la première surface d'appui de support horizontale (44a) s'étendant perpendiculairement, avec un écart de ± 3°, à la première surface d'appui de support latérale (40a) et transversalement l'une à l'autre, la plaquette de coupe (12) présentant en outre un deuxième alésage de plaquette de coupe (34) qui s'étend le long d'un deuxième axe d'alésage (38) qui est orienté parallèlement au premier axe d'alésage (36), et à la fois le premier et le deuxième alésage de plaquette de coupe (32, 34) traversant le rehaussement (30) perpendiculairement à la première surface d'appui de support latérale (40a),
**caractérisée en ce qu'**une deuxième surface d'appui de support latérale (40b) est en outre disposée au niveau du rehaussement (30), laquelle est située dans un même plan que la première surface d'appui de support latérale (40a) et est espacée de celle-ci dans la direction longitudinale de la plaquette de coupe (18), la première surface d'appui de support latérale (40a) entourant au moins en partie le premier alésage de plaquette de coupe (32), et la deuxième surface d'appui de support latérale (40b) entourant au moins en partie le deuxième alésage de plaquette de coupe (34).

2. Plaquette de coupe selon la revendication 1, dans laquelle la première surface d'appui de support latérale (40a) entoure complètement le premier alésage de plaquette de coupe (32) et/ou la deuxième surface d'appui de support latérale (40b) entoure complètement le deuxième alésage de plaquette de coupe (34).

3. Plaquette de coupe selon la revendication 1 ou 2, dans laquelle la première surface d'appui de support latérale (40a) et/ou la deuxième surface d'appui de support latérale (40b) sont des surfaces polies et la surface d'appui de support axiale (42) et la première surface d'appui de support horizontale (44a) sont des surfaces brutes de frittage.

4. Plaquette de coupe selon l'une quelconque des revendications 1 à 3, dans laquelle la surface d'appui de support axiale (42) et la première surface d'appui de support horizontale (44a) forment entre elles un angle aigu.

5. Plaquette de coupe selon l'une quelconque des revendications 1 à 4, dans laquelle la plaquette de coupe (12) présente une largeur totale (b₁) mesurée parallèlement au premier axe d'alésage (36) qui est inférieure à la somme d'une largeur (b₂) de la première arête de coupe (22) mesurée parallèlement au premier axe d'alésage (36) et d'une hauteur (h) du rehaussement (30) mesurée parallèlement au premier axe alésage (36).

6. Plaquette de coupe selon la revendication 1, dans laquelle une deuxième surface d'appui de support horizontale (44b) est en outre disposée au niveau du rehaussement (30), laquelle est espacée de la première surface d'appui de support horizontale (44a) dans la direction longitudinale de la plaquette de coupe (18).

7. Plaquette de coupe selon la revendication 6, dans laquelle une première distance (d₁) mesurée dans la direction longitudinale de la plaquette de coupe (18) entre la première et la deuxième surface d'appui de support horizontale (44a, 44b) est supérieure à une deuxième distance (d₂) entre le premier et le deuxième axe d'alésage (36, 38), mesurée dans la direction longitudinale de la plaquette de coupe (18).

8. Plaquette de coupe selon l'une quelconque des revendications 1 à 7, dans laquelle la première surface d'appui de support horizontale (44a) est adjacente au niveau d'une première extrémité, à une première surface de forme convexe (64a) disposée au niveau du rehaussement (30) et au niveau d'une deuxième extrémité opposée, vu dans la direction longitudinale de la plaquette de coupe (18), est adjacente à une deuxième surface de forme convexe (66a) disposée au niveau du rehaussement (30).

9. Plaquette de coupe selon les revendications 6 et 8, dans laquelle en outre une surface de forme concave (68) est prévue au niveau du rehaussement (30), laquelle est disposée dans la direction longitudinale de la plaquette de coupe (18) entre la première et la deuxième surface d'appui de support horizontale (44a, 44b).

10. Plaquette de coupe selon l'une quelconque des revendications 1 à 9, dans laquelle une largeur du rehaussement (30), mesurée perpendiculairement au premier axe d'alésage (36) et perpendiculairement à la direction longitudinale de la plaquette de coupe (18), est inférieure à une hauteur totale de la plaquette de coupe (12), mesurée parallèlement à celle-ci.

11. Outil (10) pour l'usinage par enlèvement de copeaux d'une pièce, comprenant une plaquette de coupe (12) selon la revendication 1, un porte-outil (14) avec un logement de plaquette de coupe (54) pour recevoir la plaquette de coupe (12) et avec un premier alésage de support (46), le porte-outil (14) s'étendant essentiellement le long d'une direction longitudinale de support (20) et le premier alésage de support (46) s'étendant le long d'un troisième axe d'alésage (50) qui s'étend essentiellement perpendiculairement à la direction longitudinale de support (20), un renfoncement (56) s'étendant essentiellement le long de la direction longitudinale de support (20) étant prévu dans le logement de plaquette de coupe (54), et une surface d'appui de plaquette de coupe latérale (58), une surface d'appui de plaquette de coupe axiale (60) et une surface d'appui de plaquette de coupe horizontale (62) étant disposées dans le renfoncement (56) pour l'appui de la plaquette de coupe (12) contre le porte-outil (14), la surface d'appui de plaquette de coupe latérale (58) s'étendant essentiellement perpendiculairement au troisième axe d'alésage (50), et la surface d'appui de plaquette de coupe axiale (60) et la surface d'appui de plaquette de coupe horizontale (62) s'étendant essentiellement perpendiculairement à la surface d'appui de plaquette de coupe latérale (58) et transversalement l'une à l'autre, et au moins un moyen de fixation (16) pour la fixation de la plaquette de coupe (12) au porte-outil (14).

12. Outil (10) selon la revendication 11, dans lequel la plaquette de coupe (12) et le porte-outil (14) s'appliquent l'un contre l'autre exclusivement avec le rehaussement (30) disposé au niveau de la plaquette de coupe (12) et le renfoncement (56) prévu dans le logement de plaquette de coupe (54) du porte-outil (14).

13. Plaquette de coupe (12) pour un outil (10) pour l'usinage par enlèvement de copeaux d'une pièce, comprenant une première arête de coupe (22) et un premier alésage de plaquette de coupe (32), la plaquette de coupe (12) présentant une forme essentiellement allongée et s'étendant essentiellement le long d'une direction longitudinale de plaquette de coupe (18), le premier alésage de plaquette de coupe (32) s'étendant le long d'un premier axe d'alésage (36), qui s'étend perpendiculairement à la direction longitudinale de la plaquette de coupe (18) avec un écart de ± 3°, la plaquette de coupe (12) présentant un rehaussement (30) saillant latéralement, qui est disposé sur un côté (28) de la plaquette de coupe (12) orienté transversalement au premier axe d'alésage (36), et une première surface d'appui de support latérale (40a), une surface d'appui de support axiale (42) et une première surface d'appui de support horizontale (44a) étant disposées au niveau du rehaussement (30) pour l'appui de la plaquette de coupe (12) contre un porte-outil (14), la première surface d'appui de support latérale (40a) s'étendant perpendiculairement, avec un écart de ± 3°, au premier axe d'alésage (36), et la surface d'appui de support axiale (42) et la première surface d'appui de support horizontale (44a) s'étendant perpendiculairement, avec un écart de ± 3°, à la première surface d'appui de support latérale (40a) et transversalement l'une à l'autre, la plaquette de coupe (12) présentant en outre un deuxième alésage de plaquette de coupe (34) qui s'étend le long d'un deuxième axe d'alésage (38) qui est orienté parallèlement au premier axe d'alésage (36), et à la fois le premier et le deuxième alésage de plaquette de coupe (32, 34) traversant le rehaussement (30) perpendiculairement à la première surface d'appui de support latérale (40a), **caractérisée en ce qu'**une deuxième surface d'appui de support horizontale (44b) est en outre disposée au niveau du rehaussement (30), laquelle est espacée de la première surface d'appui de support horizontale (44a) dans la direction longitudinale de la plaquette de coupe (18), une première distance (dᵢ) mesurée dans la direction longitudinale de la plaquette de coupe (18) entre la première et la deuxième surface d'appui de support horizontale (44a, 44b) étant supérieure à une deuxième distance (d₂) entre le premier et le deuxième axe d'alésage (36, 38), mesurée dans la direction longitudinale de la plaquette de coupe (18).

14. Outil (10) pour l'usinage par enlèvement de copeaux d'une pièce, comprenant une plaquette de coupe (12) selon la revendication 13, un porte-outil (14) avec un logement de plaquette de coupe (54) pour recevoir la plaquette de coupe (12) et avec un premier alésage de support (46), le porte-outil (14) s'étendant essentiellement le long d'une direction longitudinale de support (20) et le premier alésage de support (46) s'étendant le long d'un troisième axe d'alésage (50) qui s'étend essentiellement perpendiculairement à la direction longitudinale de support (20), un renfoncement (56) s'étendant essentiellement le long de la direction longitudinale de support (20) étant prévu dans le logement de plaquette de coupe (54), et une surface d'appui de plaquette de coupe latérale (58), une surface d'appui de plaquette de coupe axiale (60) et une surface d'appui de plaquette de coupe horizontale (62) étant disposées dans le renfoncement (56) pour l'appui de la plaquette de coupe (12) contre le porte-outil (14), la surface d'appui de plaquette de coupe latérale (58) s'étendant essentiellement perpendiculairement au troisième axe d'alésage (50), et la surface d'appui de plaquette de coupe axiale (60) et la surface d'appui de plaquette de coupe horizontale (62) s'étendant essentiellement perpendiculairement à la surface d'appui de plaquette de coupe latérale (58) et transversalement l'une à l'autre, et au moins un moyen de fixation (16) pour la fixation de la plaquette de coupe (12) au porte-outil (14).
